# EUROPÄISCHE PATENTSCHRIFT

(11) **EP 1 529 803 B1**
(45) Veröffentlichungstag und Bekanntmachung des Hinweises auf die Patenterteilung: **07.11.2007**
(21) Anmeldenummer: 04104648.3
(22) Anmeldetag: 24.09.2004
(51) Int. Cl.: C08K 3/36, C08K 3/04, C08K 5/098, C08J 5/10, C08L 21/00

(54) **Gummierungsmischung für metallische Festigkeitsträger und Fahrzeugluftreifen mit einer solchen Gummierungsmischung**
Rubber coating composition for metallic reinforcements and tires using the rubber coating composition
Composition de gommage pour renforcements métalliques et pneu pour véhicule comportant cette composition de gommage

(30) Priorität: 07.11.2003 DE 10352045
(43) Veröffentlichungstag der Anmeldung: 11.05.2005
(73) Patentinhaber: Continental Aktiengesellschaft, 30165 Hannover (DE)
(72) Erfinder: Weber, Christian Dr., 30823 Garbsen (DE)

(56) Entgegenhaltungen:
- EP-A- 1 260 384
- DE-A- 10 049 964
- GB-A- 1 122 528
- J. SCHNETGER: "Lexikon der Kautschuk-Technik" 1991, HÜTHIG BUCH VERLAG , HEIDELBERG , XP002313265 * Kieselsäure-Füllstoffe * * Seite 331 - Seite 332 *

## Beschreibung

Die Erfindung betrifft eine Gummierungsmischung für metallische Festigkeitsträger, enthaltend zumindest einen Dienkautschuk, zumindest ein organisches Cobaltsalz, Ruß, Kieselsäure und zumindest ein Silankupplungsagenz, wobei der Anteil an Ruß und Kieselsäure insgesamt 40 - 70 phr (Gewichtsteile, bezogen auf 100 Gewichtsteile der gesamten Kautschuke in der Mischung) beträgt. Die Erfindung betrifft ferner einen Fahrzeugluftreifen, der eine solche Gummierungsmischung als Gürtel- und/oder Karkassgummierung aufweist.

Viele Gummiprodukte sind mit metallischen Festigkeitsträgern, z. B. mit vermessingtem Stahlcord, verstärkt, um hohen mechanischen Beanspruchungen standzuhalten. Fahrzeugluftreifen weisen z. B. vermessingten Stahlcord im Gürtel, im Wulstkern und ggf. in der Karkasse auf. Um die Haltbarkeit des Gummi-Festigkeitsträger-Verbundes zu gewährleisten, soll die einbettende Kautschukmischung (Gummierungsmischung) eine gute Haftung zum Festigkeitsträger aufzeigen, wobei die Haftung durch Alterung und feuchter Lagerung nicht beeinträchtigt werden sollte. Die Vulkanisate sollten außerdem eine hohe dynamische und mechanische Beständigkeit aufweisen.

Zur Verbesserung der Gummi-Metall-Haftung ist es seit langem bekannt, Cobaltsalze oder ein Resorcin-Formaldehyd-Kieselsäuresystem als Zusätze für die Gummierungsmischungen zu verwenden. Gummierungsmischungen mit Cobaltsalzen und einem Resorcin-Formaldehyd-Kieselsäuresystem sind z. B. aus KGK Kautschuk Gummi Kunststoffe Nr. 5/99, S. 322-328, aus GAK 8/1995, S. 536 und der EP-A-1 260 384 bekannt. Gummierungsmischungen gemäß dem Oberbegriff des Anspruchs 1, die auch ein Silankupplungsagenz enthalten, sind aus der EP-A-1 260 384 bekannt.

In der DE 100 49 964 A1 werden Kautschuk-Haftmischungen offenbart, die neben einem Kautschuk mit Hydroxyl- oder Carboxylgruppen Haftmittel und Ruß und Kieselsäure enthalten. Die Beispiele zeigen Kieselsäure und Ruß in einem maximalen Verhältnis von 3 zu 10. Ruß liegt stets im Überschuss vor und die Kieselsäure wird ohne SilanKupplungsagenz, d. h. nicht aktiviert, eingesetzt. Es ist bekannt nicht aktivierte Kieselsäure in Systemen mit Resorcin und Formaldehydspender einzusetzen, um die Umsetzung des Resorcins mit dem Formaldehydspender zu unterstützen und die Reaktionsausbeute zu erhöhen.

Gummierungsmischungen, die nicht aktivierte Kieselsäure (kein Silankupplungsagenz vorhanden), Ruß und organisches Cobaltsalz enthalten, sind auch aus der GB 1,122,528 bekannt.

Aus J. Schnetger, Lexikon der Kautschuk-Technik, 1991, S. 331-332 ist es ferner bekannt, zur Verbesserung der Verarbeitbarkeit und Herabsetzung der Beschleunigeradsorption an Kieselsäure, kieselsäurehaltigen Kautschukmischungen Silankupplungsagenzien (Verstärkungsadditive) zuzudosieren.

In bekannten Gummierungsmischungen wird entweder als Füllstoff nur Kieselsäure eingesetzt (Füllstoff 100 Gew.-% Kieselsäure) oder es wird Kieselsäure in Kombination mit Ruß eingesetzt. Bei einer Kombination von Kieselsäure mit Ruß geht der Anteil der Kieselsäure an der Gesamtfüllstoffmenge nicht über einen Wert von ca. 30 Gew.-% hinaus. Reine Kieselsäure-Gummierungsmischungen lassen sich schwierig verarbeiten, während bei Mischungen mit der Kombination von Kieselsäure mit Ruß die Haftung zum metallischen Festigkeitsträger nicht immer ausreichend ist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Der vorliegenden Erfindung liegt die Aufgabe zugrunde, Gummierungsmischungen für metallische Festigkeitsträger, insbesondere vermessingten Stahlcord, bereitzustellen, die eine gute Haftung zum Stahlcord bei einfacher Verarbeitbarkeit aufweisen.

Gelöst wird diese Aufgabe erfindungsgemäß dadurch, dass Kieselsäure und Ruß im Gewichtsverhältnis von 2:3 bis 9:1 in der Mischung vorliegen und die Gummierungsmischung pro 100 Gewichtsteile Kieselsäure 8 bis 20 Gewichtsteile zumindest eines Silankupplungsagenzes enthält.

Beim Einsatz einer solchen Teilkieselsäuremischung lässt sich überraschenderweise eine gute Haftung bei einfacher Verarbeitbarkeit erreichen. Erst bei Mengen von weniger als 40 Gew.-% Kieselsäure an der Gesamtfüllstoffmenge nimmt die Haftung ab. Die Mischung bietet zusätzlich ein ausgewogenes Verhältnis zwischen Haftung und Materialkosten, da Kieselsäure im Vergleich zu Ruß teurer ist.

Die vorgenannten Eigenschaften führen bei Verwendung als Gummierungsmischung des Gürtels und/oder der Karkasse in Fahrzeugluftreifen zu einer verbesserten Gürtel- und/oder Karkasshaltbarkeit. Bei Reifen, die runderneuert werden können, erhöht sich dadurch die Runderneuerungsfähigkeit. Die erfindungsgemäßen Gummierungsmischungen können aber auch zur Gummierung des Wulstkernes dienen. Ferner können die Mischungen für andere Gummiartikel, die mit metallischen Festigkeitsträgern verstärkt sind, wie z. B. Antriebsriemen und Gurte, verwendet werden.

Gemäß einer bevorzugten Weiterbildung der Erfindung liegen Kieselsäure und Ruß im Verhältnis von 1:1 bis 4:1 in der Mischung vor. Die Mischung weist den Vorteil einer hohen Ermüdungsbeständigkeit des Vulkanisats auf.

Die Gummierungmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der Kautschukmischung verarbeiten.

Die Gummierungsmischung enthält bevorzugt 50 bis 95 phr Naturkautschuk, bei weniger als 50 phr kann es zu Einbußen in den Weiterreißfestigkeit kommen. Besonders bevorzugt werden 65 bis 90 phr Naturkautschuk eingesetzt, da man bei diesem Anteil besonders gute Ergebnisse hinsichtlich der Weiterreißfestigkeit und des dynamischen Moduls erhält.

Die Gummierungsmischung kann bevorzugt bis zu 35 phr zumindest eines weiteren Dienkautschukes außer Naturkautschuk enthalten. Es können z. B. cis-1,4-Polybutadien, syndiotaktisches 1,2-Polybutadien, Vinyl-Polybutadien oder Verschnitte daraus eingesetzt werden, was sich günstig auf die Haftung auswirkt.

Zusätzlich zu den genannten Dienkautschuken kann die Gummierungsmischung auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Gummierungsmischung enthält zumindest ein organisches Cobaltsalz zur weiteren Haftungsverbesserung. Das Cobaltsalz wird bevorzugt in Mengen von 0,2 bis 2 phr eingesetzt. Als Cobaltsalze können z. B. Cobaltstearat, -borat, -borat-alkanoate, -naphthenat, -rhodinat, -octoat, -adipat usw. verwendet werden.

Ferner enthält die Mischung vorzugsweise als die Haftung zu Stahlcord weiter verbessernde Substanzen ein Resorcin-Formaldehyd-Haftsystem aus Resorcin und einem Formaldehydspender, wie z. B. Hexamethoxymethylmelamin (HMMM) oder Hexamethylentetramin (HEXA).

Die Gummierungsmischung enthält Ruß und Kieselsäure, wobei der Anteil an Ruß und Kieselsäure 40 - 70 phr beträgt. Bei höheren Füllstoffmengen steigt die Viskosität der Mischung an und es kann zu Verarbeitungsproblemen kommen. Bei weniger als 40 phr Füllstoffanteil kann sich die Weiterreißfestigkeit der Vulkanisate verschlechtern.

Die verwendeten Ruße sollten insbesondere folgende Charakteristika aufweisen: DBP-Zahl (gemäß ASTM D 2414) 60 bis 160 mL/100 g, CTAB-Zahl (gemäß ASTM D 3765) 75 bis 170 m²/g und Iodadsorptionszahl (gemäß ASTM D 1510) 10 bis 250 g/kg.

Bei den verwendeten Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist.

Die Gummierungsmischung enthält als notwendigen Bestandteil ein SilanKupplungsagenz zur Anbindung der Kieselsäure an die umgebenden Kautschukmoleküle. Die Vulkanisate werden dadurch in der Ermüdungs- und Rissbeständigkeit verbessert, wobei diese Eigenschaften für die Verwendung als Gummierungsmischung besonders wichtig sind. Ferner wirken Silan-Kupplungsagenzien viskositätssenkend.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Die Silan-Kupplungsagenzien werden in Mengen von 8 bis 20 Gewichtsteilen, bezogen auf 100 Gewichtsteile Kieselsäure, eingesetzt, da dann eine optimale Anbindung des Füllstoffes an den oder die Kautschuke erfolgen kann.

Um bei Anwesenheit von Cobaltsalzen eine gute Stahlcordhaftung zu erzielen, ist es vorteilhaft, die Mischung mit viel Schwefel, bevorzugt 3,5 bis 6 phr Schwefel, oder einer äquivalenten Menge an Schwefelspender zu vernetzen.

Als weitere Zusatzstoffe kann die Gummierungsmischung weitere übliche Zuschlagstoffe in üblichen Gewichtsteilen, wie Vulkanisationsbeschleuniger , Vulkanisationsverzögerer, Zinkoxid, weitere Füllstoffe, Verarbeitungshilfsmittel (z. B. Minaralölweichmacher, Phenolharze) und Alterungsschutzmittel, enthalten.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet. Z. B. kann der Stahlcord für den Gürtel eines Fahrzeugluftreifens mit dieser Mischung kalandriert werden (Gürtelgummierung).

Ein Reifen, der einen Gürtel und/oder eine Karkasse mit der erfindungsgemäßen Gummierungsmischung aufweist, zeichnet sich durch eine gute Haltbarkeit aus.

Die Erfindung soll nun anhand von Vergleichs- und Ausführungsbeispielen, die in den Tabellen 1 und 2 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet.

In der Tabelle 1 sind die Mischungszusammensetzungen angegeben. Die Mischungen in der Tabelle 1 unterscheiden sich einzig in den eingesetzten Füllstoff- und SilanKupplungsagenz-Mengen. In der Tabelle 2 sind für die verschiedenen Mischungen die ermittelten Mischungs- und Vulkanisateigenschaften aufgelistet.

Die Mischungsherstellung erfolgte unter üblichen Bedingungen. Die Mooney-Viskositäten der Mischungen, angegeben in Mooney-Einheiten (ME), wurden gemäß DIN 53 523 mit einem Scherscheiben-Viskosimeter bei 100 °C ermittelt. Aus sämtlichen Mischungen wurden Prüfkörper durch 30-minütige Vulkanisation unter Druck bei 150 °C hergestellt und mit diesen Prüfkörpern für die Kautschukindustrie typische Materialeigenschaften bestimmt, die in der Tabelle 3 bis 6 aufgelistet sind. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100 % Dehnung bei Raumtemperatur gemäß DIN 53 504
- Shore-A-Härte bei Raumtemperatur gemäß DIN 53 505
- Rückprallelastizität bei Raumtemperatur gemäß DIN 53 512
- Ermüdungsrissbeständigkeit als Anzahl der Lastwechsel bis zum Bruch einer hantelförmigen Probe unter einem sich ständig wiederholenden Dehnungszyklus mit einer Frequenz von 104 ± 8 min⁻¹, bestimmt mit einem Monsanto Fatique to Failure Tester bei 136 % Dehnung
- Stahlcordhaftung gemäß ASTM 2229/D1871 vor und nach Alterung über 14 Tage bei 70 °C und 95 % Luftfeuchtigkeit, Einbettlänge 12,5 mm, Auszugsgeschwindigkeit 125mm/min, Messung der Kraft und der Bedeckung mit Gummi (0 = keine Bedeckung, 5 = 100 % Bedeckung), verwendeter Stahlcord: vermessingt, 3x0,20 + 6x0,35

**Tabelle 1**

| **Bestandteile** | **Einheit** | **1(V)** | **2(V)** | **3(E)** | **4(E)** | **5(V)** | **6(V)** |
|---|---|---|---|---|---|---|---|
| Naturkautschuk | phr | 80 | 80 | 80 | 80 | 80 | 80 |
| BR^{a} | phr | 20 | 20 | 20 | 20 | 20 | 20 |
| Ruß N326 | phr | 4,25 | 10 | 15,25 | 27,25 | 44,25 | 57 |
| Kieselsäure | phr | 57 | 51 | 46 | 34 | 17 | 4 |
| Silan-Kupplungsagens | phr | 4,25 | 4 | 3,75 | 3,25 | 1,7 | - |
| Verarbeitungshilfsmittel | phr | 10 | 10 | 10 | 10 | 10 | 10 |
| Alterungsschutzmittel | phr | 2 | 2 | 2 | 2 | 2 | 2 |
| Zinkoxid | phr | 9 | 9 | 9 | 9 | 9 | 9 |
| Harz aus Resorcin und Formaldehydspender | phr | 5 | 5 | 5 | 5 | 5 | 5 |
| org. Cobaltsalz | phr | 1 | 1 | 1 | 1 | 1 | 1 |
| Beschleuniger | phr | 1,6 | 1,6 | 1,6 | 1,6 | 1,6 | 1,6 |
| Schwefel | phr | 4 | 4 | 4 | 4 | 4 | 4 |

| | | | | | | | |
|---|---|---|---|---|---|---|---|
| ^{a} cis-1,4-Polybutadien | | | | | | | |

**Tabelle 2**

| **Eigenschaften** | **Einheit** | **1(V)** | **2(V)** | **3(E)** | **4(E)** | **5(V)** | **6(V)** |
|---|---|---|---|---|---|---|---|
| Mooney-Viskosität ML 1+3 bei 100 °C | ME | 84,5 | 78,8 | 78,8 | 75,6 | 73,2 | 72,7 |
| Zugfestigkeit bei RT | MPa | 21,8 | 20,1 | 18,6 | 19,8 | 19,1 | 19,6 |
| Reißdehnung bei RT | % | 528 | 477 | 434 | 435 | 382 | 390 |
| Spannungswert 100 % | MPa | 3,45 | 3,53 | 3,58 | 3,85 | 4,16 | 4,02 |
| Shore-A-Härte bei RT | Shore A | 78,2 | 75,8 | 75,7 | 75,2 | 75,4 | 76 |
| Rückprallelastizität bei RT | % | 42,5 | 45,2 | 44,2 | 45,6 | 46,1 | 45,4 |
| Ermüdungsrissbeständigkeit bei 136 % Dehnung (Mittelwert) | × 1000 Zyklen | 25,82 | 18,35 | 34,85 | 14 | 9,2 | 12,6 |
| Stahlcordhaftung ungealtert (Herausziehkraft) | N | 889 | 883 | 912 | 900 | 805 | 780 |
| Stahlcordhaftung ungealtert (Bedeckung) | | 4,3 | 4,5 | 4,5 | 5 | 4,9 | 4,9 |
| Stahlcordhaftung gealtert (Herausziehkraft) | N | 716 | 672 | 701 | 678 | 605 | 495 |
| Stahlcordhaftung gealtert (Bedeckung) | | 4,6 | 4,3 | 4,5 | 4, | 4,5 | 4,1 |

Aus der Tabelle 2 wird ersichtlich, dass die Haftung sowohl vor als auch nach Alterung bei einem sukzessiven Austausch von Kieselsäure durch Ruß - wie in den Mischungen 1 bis 6 durchgeführt - zunächst noch auf gutem Niveau verbleibt. Erst bei einem Kieselsäure/Ruß-Verhältnis von weniger als 2:3, wie es in den Mischungen 5 und 6 vorliegt, nimmt die Haftung stark ab. Die Mischungen 2 bis 4 lassen sich besser verarbeiten als die Mischung 1, was anhand der niedrigen Mooney-Viskositäten der Mischungen 2 bis 4 belegt werden kann. Die Mischungen 2 und 3 zeichnen sich außerdem durch eine hohe Ermüdungsrissbeständigkeit aus.

## Patentansprüche

1. Gummierungsmischung für metallische Festigkeitsträger, enthaltend zumindest einen Dienkautschuk, zumindest ein organisches Cobaltsalz, Ruß, Kieselsäure und zumindest ein Silankupplungsagenz, wobei der Anteil an Ruß und Kieselsäure insgesamt 40 - 70 phr (Gewichtsteile, bezogen auf 100 Gewichtsteile der gesamten Kautschuke in der Mischung) beträgt,
**dadurch gekennzeichnet, dass** Kieselsäure und Ruß im Gewichtsverhältnis von 2:3 bis 9:1 in der Mischung vorliegen und die Gummierungsmischung pro 100 Gewichtsteile Kieselsäure 8 bis 20 Gewichtsteile zumindest eines Silankupplungsagenzes enthält.

2. Kautschukmischung nach Anspruch 1, **dadurch gekennzeichnet, dass** Kieselsäure und Ruß im Verhältnis von 1:1 bis 4:1 in der Mischung vorliegen.

3. Kautschukmischung nach Anspruch 1 oder 2, **dadurch gekennzeichnet, dass** sie ein Resorcin-Formaldehyd-Haftsystem enthält.

4. Kautschukmischung nach zumindest einem der vorhergehenden Ansprüche, **dadurch gekennzeichnet, dass** sie 3,5 bis 6 phr Schwefel enthält.

5. Fahrzeugluftreifen, der eine mit Schwefel vernetzte Kautschukmischung nach zumindest einem Ansprüche 1 bis 4 als Gürtel- und/oder Karkassgummierung aufweist.

## Claims

1. Rubberizing mixture for metallic strength members, containing at least one diene rubber, at least one organic cobalt salt, carbon black, silica and at least one silane coupling agent, the proportion of carbon black and silica altogether being 40-70 phr (parts by weight, based on 100 parts by weight of the total rubber in the mixture), **characterized in that** silica and carbon black are present in the weight ratio of 2:3 to 9:1 in the mixture, and the rubberizing mixture contains 8 to 20 parts by weight of at least one silane coupling agent per 100 parts by weight of silica.

2. Rubber mixture according to Claim 1, **characterized in that** silica and carbon black are present in the ratio of 1:1 to 4:1 in the mixture.

3. Rubber mixture according to Claim 1 or 2,
**characterized in that** it contains a resorcinol-formaldehyde adhesive system.

4. Rubber mixture according to at least one of the preceding claims, **characterized in that** it contains 3.5 to 6 phr of sulphur.

5. Pneumatic vehicle tyre which has a sulphur-crosslinked rubber mixture according to at least one of Claims 1 to 4 as belt and/or carcass rubberizing.

## Revendications

1. Composition de caoutchouc pour renforts métalliques, contenant au moins un caoutchouc diène, au moins un sel organique de cobalt, du noir de carbone, de l'acide silicique et au moins un agent de couplage de type silane, la teneur en noir de carbone et acide silicique allant au total de 40 à 70 phr (parties en poids, par rapport à 100 parties en poids de l'ensemble des caoutchoucs dans la composition), **caractérisée en ce que** l'acide silicique et le noir de carbone sont présents dans la composition en un rapport pondéral de 2:3 à 9:1 et la composition de caoutchouc contient de 8 à 20 parties en poids d'au moins un agent de couplage de type silane pour 100 parties en poids d'acide silicique.

2. Composition de caoutchouc selon la revendication 1, **caractérisée en ce que** l'acide silicique et le noir de carbone sont présents en un rapport de 1:1 à 4:1 dans la composition.

3. Composition de caoutchouc selon la revendication 1 ou 2, **caractérisée en ce qu'**elle contient un système adhésif résorcinol-formaldéhyde.

4. Composition de caoutchouc selon au moins l'une des revendications précédentes, **caractérisée en ce qu'**elle contient de 3,5 à 6 phr de soufre.

5. Pneumatique pour véhicule, qui comporte une composition de caoutchouc réticulée au soufre, selon au moins l'une des revendications 1 à 4, en tant que caoutchouc pour carcasse ou ceinture radiale
